# EUROPEAN PATENT SPECIFICATION

(11) **EP 3 736 478 B1**
(45) Date of publication and mention of the grant of the patent: **11.12.2024**
(21) Application number: 20170529.0
(22) Date of filing: 21.04.2020
(51) Int. Cl.: F16L 25/00, F16L 33/26, F16K 5/00, F16L 29/00

(54) **VALVE ASSEMBLY**
VENTILANORDNUNG
ENSEMBLE SOUPAPE

(30) Priority: 09.05.2019 GB 201906553
(43) Date of publication of application: 11.11.2020
(73) Proprietor: BES YAPI ÜRÜNLERI SANAYI ANONIM SIRKETI, Istanbul (TR)
(72) Inventor: Akman, Bilal, Istanbul (TR)
(74) Representative: J A Kemp LLP

(56) References cited:
- WO-A1-2012/168879
- WO-A2-2011/126251
- GB-A- 2 563 625
- US-A- 4 907 830
- US-A1- 2006 006 651
- US-A1- 2007 029 795

## Description

The present invention relates to a valve assembly. More particularly, the assembly disclosed herein is suitable for use in, for example, natural gas facility systems and plumbing applications.

Typical valve assemblies known in the art are generally provided with an internal or external thread on each end for connection to pipes or other fittings. Connectors such as olive compression fittings are typically used to connect the valve assembly to pipes. These pipes generally have a smooth outer surface and are often formed of copper. Olive rings are also typically formed of copper and take a complete ring shape having smooth outer and inner surfaces such that the olive ring can be compressed around the pipe. Smooth surfaced copper pipes require specialist tools for installation. Different shapes of pipe or different fittings must be required in order to fit pipes with a corner or elbow. In order to connect the valve to the pipe, it is necessary to screw the valve and pipe together. The pipe will often already be in place when the valve is added. In areas of limited space and accessibility, it can be difficult and time consuming to securely connect the valve assembly to the pipe. It can be necessary to use an adaptor between the valve assembly and the pipe if the pipe does not have a compatible end for connection to the pipe. It can be difficult to achieve an effective seal between the valve assembly and the pipe. A good seal is necessary for safe, efficient and effective operation of the valve.

WO 2011/126251 A2 discloses a connection structure of corrugated pipe. US 2006/0006651 A1 discloses a corrugated tube fitting. US 2007/0029795 A1 discloses a pre-assembled, push-in fitting connection for corrugated tubing. GB 2563625 A discloses a pipe connector for a flexible hose. WO 2012/168879 A1 discloses a fitting.

The present invention aims to provide means to install a valve assembly more quickly and easily while providing an effective seal.

The present invention is defined by the claims. Any aspects, embodiments and examples of the present disclosure which do not fall under the scope of the appended claims do not form part of the invention and are merely provided for illustrative purposes.

In one aspect of the disclosure the valve assembly comprises a valve main body; a valve housed in the valve main body; and a connector comprising a nut a sealing gasket, and a connector end; wherein the connector end is integrally formed as part of the valve main body, wherein the connector is configured to connect the valve main body to a corrugated hose that has an end disposed within the connector end, and wherein the connector is configured such that the sealing gasket radially contracts so as to grip the corrugated hose when the nut is tightened over the connector end.

Optionally, the sealing gasket has a sloped outer surface. The connector may be configured such that the sloped outer surface of the sealing gasket engages with another sloped surface of the connector such that the sealing gasket radially contracts when the nut is tightened over the connector end. In one aspect of the disclosure, the other sloped surface of the connector may be an inside surface of the nut. In another aspect of the disclosure the other sloped surface of the connector is an inside surface of the connector end.

The valve assembly is configured such that, when the nut is tightened over the connector end, the sealing gasket is configured to urge the end of the corrugated hose axially towards a lip of the connector end.

Optionally, a protrusion may be formed on the inside of the sealing gasket. The protrusion of the sealing gasket is configure to engage with a ridge of the corrugated hose when the nut is tightened over the connector end. Optionally, two protrusions may be formed on the inside of the sealing gasket. The protrusions of the sealing gasket being configured to grasp a ridge of the corrugated hose when the nut is tightened over the connector end.

The shape of the sealing gasket allows the sealing gasket to radially contract so as to grip the corrugated hose when the nut is tightened over the connector end. The sealing gasket may, for example, be a circlip or broken ring shape. Optionally, the sealing gasket may be a complete or broken ring shape with slits forming gaps at intervals around the circumference of the sealing gasket, such that the sealing gasket radially contracts so as to grip the corrugated hose when the nut is tightened over the connector end. Particularly, tips of fingers of the sealing gasket may contract so as to grip the corrugated hose when the nut is tightened over the connector end. Optionally, the sealing gasket may be configured to engage with the nut such that the sealing gasket will remain in place in the nut if the nut is removed from the connector end.

Optionally, the sealing gasket may be formed of brass.

The valve assembly comprises a resilient gasket disposed inside the connector end, wherein the resilient gasket is compressed between the corrugated hose and an inner wall of the connector end when the nut is tightened over the connector end. The valve assembly may be configured such that the resilient gasket is axially compressed by the sealing gasket when the nut is tightened over the connector end.

Optionally, an external thread may be formed on the connector end to engage with the nut. Optionally, a removable ring may be disposed on the external thread to prevent the nut from being tightened over the connector end such that the sealing gasket grips the corrugated hose.

According to an aspect of the present disclosure, the connector end is integrally formed on the valve main body at one side of the valve to connect the valve main body to a corrugated hose using the connector. Optionally, a connector having an internal thread may be provided on the valve main body on other side of the valve. Optionally, a connector having an external thread may be provided on the valve main body on other side of the valve. Optionally, a connector configured to connect the valve assembly to a pipe using an olive compression fitting may be provided on other side of the valve. Optionally, a second connector end may be integrally formed on the valve main body at the other side of the valve to connect the valve main body to a second corrugated hose using a second connector.

Optionally, the valve assembly may comprise a handle configured to change the valve between an open position and a closed position.

Optionally, the valve assembly may comprise mounting base formed on the valve main body.

The valve is a ball valve. The lip of the connector end is configured to support a seat ring of the ball valve. In an unclaimed example, the valve may, for example, be a butterfly/disc valve, globe valve or diaphragm valve.

The valve assembly is connected to the hose by inserting an end of the corrugated hose into the connector end and tightening the nut over the connector end such that the sealing gasket radially contracts so as to grip the corrugated hose.

Aspects of the present disclosure will now be described with reference to the accompanying figures:
**Figure 1** - Cross-sectional view of a first example aspect of the invention.
**Figure 2** - Cross-sectional view of a first example aspect of the invention with corrugated hose connected.
**Figure 3** - Cross-sectional view of a second example aspect of the invention.
**Figure 4** - Cross-sectional view of a second example aspect of the invention with corrugated hose connected.
**Figure 5** - Cross-sectional view of an example aspect of the invention with a test point.

Parts that are seen in figure are numbered and their names are provided in the following.
1 mounting base
2 seat
3 ball
4 internal thread connector
5 O-ring
6 shaft
7 shaft fixing nut
8 handle
9 handle nut
10, 30 nut
11, 31 sealing gasket
12 washer
13, 33 resilient gasket
14 removable ring
15 lip
16 protrusions
17, 37 sloped outer surface
18, 38 sloped inner surface
19, 39 connector end
20 valve main body
21 corrugated hose
22 slits
23 fingers
24 connector
25 test point
26 chamfered surface
40 protrusion
41 groove

Corrugated hoses may be used in place of pipes. Corrugated hoses can be installed more quickly and easily than pipes. This is in part because corrugated hoses may be bent into the desired shape, for example to form a curve or elbow, rather than using a different specialist fitting. The connectors, such as olive compression fittings, typically used on smooth pipes are not suitable for connection to corrugated hoses.

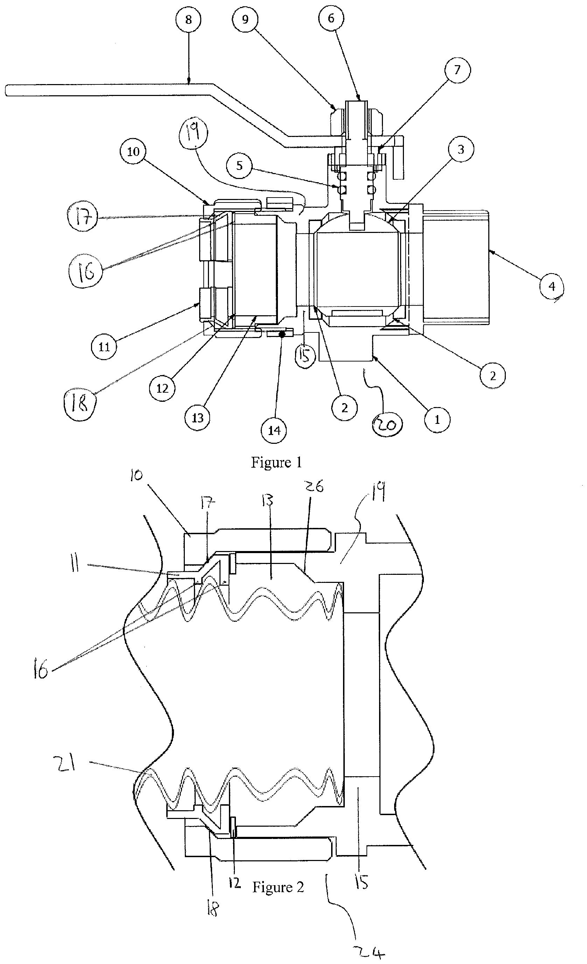

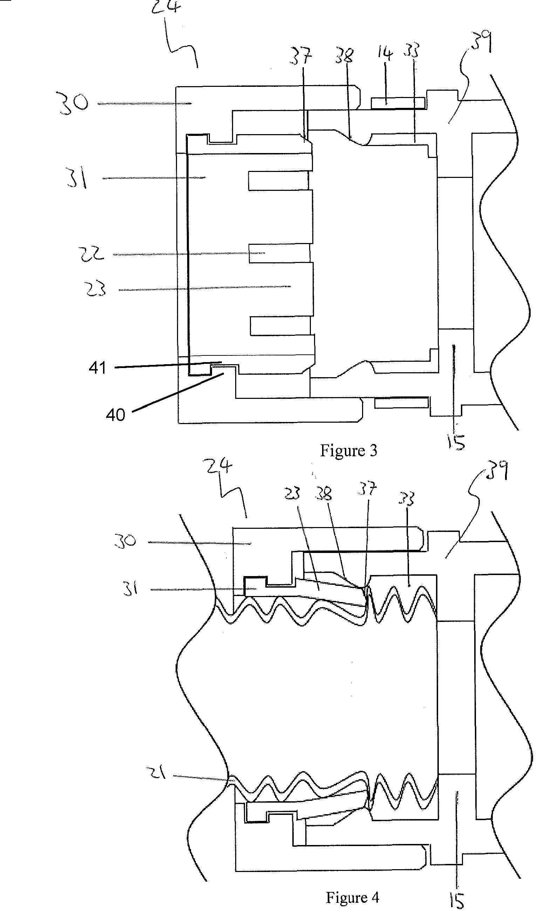

As illustrated in figure 1, the valve assembly of the present disclosure comprises a valve main body (20) to house a valve. During operation, the valve assembly will be connected to other fittings, such as a pipe or hose. As illustrated in figures 1 to 4, the valve assembly further comprises a connector (24) comprising a nut (10, 30), a sealing gasket (11, 31), and a connector end (19, 39). The connector end (19, 39) is integrally formed as part of the valve main body (20). The connector end (19, 39) is part of the valve main body (20) such that the connector end (19, 39) is not removed when the valve assembly is being connected to the corrugated hose (21) or disconnected from the corrugated hose (21). The connector end (19, 39) is integrally formed as part of the valve main body (20) such that the connector end (19, 39) cannot be removed from the valve main body (20). This is beneficial as it allows the valve assembly to be connected to a corrugated hose (21) without the use of additional adapters, other than the components of the connector (24). As illustrated in figures 2 and 4, the connector (24) is configured to connect the valve main body (20) to a corrugated hose (21) that has an end disposed within the connector end (19, 39). It is not necessary for the hose to have a threaded end for connection to the valve main body (20). It is not necessary for the hose to have a flat surface or a smooth surface for connection to the valve main body (20). The connector (24) is configured such that the sealing gasket (11, 31) radially contracts around the corrugated hose (21) when the nut (10, 30) is tightened over the connector end (19, 39). Thus, the sealing gasket (11, 31) may grip the corrugated hose (21). A metal-metal seal may be formed between the corrugated hose (21) and the connector end (19, 39). A metal-metal seal may be formed between the corrugated hose (21) and the sealing gasket (11, 31). The particular example of a ball valve assembly is illustrated in figure 1, however, the invention is applicable to other types of valve with different shapes of valve main bodies. For example, the valve may be a butterfly/disc valve, globe valve or diaphragm valve.

Optionally, the sealing gasket (11, 31) may have a sloped outer surface (17, 37). The connector (24) may be configured such that the sloped outer surface (17, 37) of the sealing gasket (11, 31) engages with another surface of the connector (24) when the nut (10, 30) is tightened over the connector end (19, 39). The other surface of the connector (24), which the sloped outer surface (17, 37) of the sealing gasket (11, 31) engages with, may also be sloped. Optionally, the outer surface (17, 37) of the sealing gasket may be tapered or formed of a frustoconical shape. Optionally, the other surface of the connector (24), which the sloped outer surface (17, 37) of the sealing gasket (11, 31) engages with may be tapered or formed of a frustoconical shape. The engagement between the sloped outer surface (17, 37) of the sealing gasket (11, 31) and the other sloped surface of the connector (24) may be such that at least part of the sealing gasket (11, 31) radially contracts when the nut (10, 30) is tightened over the connector end (19, 39).

The present invention allows the valve main body (20) to be connected to the corrugated hose (21) quickly and easily. There is no need to rotate the hose (21) or the valve main body (20) in order to make the connection. Only the nut (10) needs to be rotated with respect to the connector end (19, 39) in order to make the connection. Therefore, the connection can be made in a limited space or areas with poor accessibility. A good seal is achieved between the hose and the connector.

In one aspect of the disclosure, as illustrated in figures 1 and 2, the other sloped surface of the connector (24) may be an inside surface of the nut (10). The sloped inside surface of the nut (10) may be formed on the inner side of an end lip of the nut (10). As the nut (10) is tightened, the sloped inner surface (18) of the nut (10) contacts the sloped outer surface (17) of the sealing gasket (11). The sloped inner surface (18) of the nut (10) urges the sealing gasket (11) in an axial direction. The terminal end of the connector end (19) prevents the sealing gasket (11) from moving further towards the valve in an axial direction. The sloped surface of the nut (10) also urges the sloped outer surface (17) of the nut (10) radially inwards. As a consequence, a portion of the sealing gasket (11) radially contracts. If an end of the corrugated hose (21) is disposed within the connector end (19), a part of the sealing gasket (11) radially contracts around the corrugated hose (21). Thus, the corrugated hose (21) is connected to the valve main body (20) using the connector (24). This configuration allows the sealing gasket (11) to engage with the nut (10) such that the sealing gasket (11) can be readily removed from within the nut (10) if the nut (10) is removed from the connector end (19). Thus, the sealing gasket (11) can be changed if desired. A sealing gasket (11) with a different shape or size may therefore be used to correspond to the size and shape of the corrugated hose (21) and its ridges. Similarly, with this configuration, the nut (10) may optionally be replaced with a different nut (10) having a different angle or depth of sloped surface (10). This adaptability means that a good seal can be achieved between the connector (24) and various sizes of connector hose (21).

In another aspect of the disclosure, as illustrated in figures 3 and 4, the other sloped surface of the connector (24) is an inside surface of the connector end (39). The sloped inside surface of the connector end (39) may be formed on a protrusion on the inside of the connector end (39). Optionally, there may be a single protrusion around the whole inner circumference of the connector end (39). Alternatively, there may be several protrusions formed at intervals around the inner circumference of the connector end (39). The sloped inside surface of the connector end (39) may be a surface of a protrusion. The protrusion on the inside of the connector end (39) may keep the resilient seal in a desirable positon. For example, the protrusion on the inside of the connector end (39) may form the outer wall of a resilient seal seat formed in the connector end (39). As the nut (30) is tightened, the nut (30) urges the sealing gasket (31) in an axial direction. As the sealing gasket (31) moved in an axial direction towards the valve, the sloped inner surface (38) of the connector end (39) contacts the sloped outer surface (37) of the sealing gasket (31). The sloped inner surface (38) of the connector end (39) urges the a part of the sealing gasket (31) radially inwards. As a consequence, a portion of the sealing gasket (31) radially contracts. If an end of the corrugated hose (21) is disposed within the connector end (39), a part of the sealing gasket (31) radially contracts around the corrugated hose (21). Thus, the corrugated hose (21) is connected to the valve main body (20) using the connector (24). With this configuration a good seal can be achieved between the connector (24) and the corrugated hose (21). The sealing gasket (31) of this configuration contracts around the corrugated hose (21) near the end of the corrugated hose (21). This configuration enables a well-sealed connection to be achieved for corrugated hoses (21) having ridges of different sizes.

A groove may be provided around the inner circumference of the nut (30). A protrusion may be provided around the outer circumference of the sealing gasket (31). In order to insert the sealing gasket (31) in place in the nut (30), the sealing gasket (31) may be compressed such that it contracts in a radially direction. With the sealing gasket (31) compressed radially, it may be inserted in the nut (30) such that protrusion is axially aligned with the groove. The protrusion of the sealing gasket (31) may therefore be configured to engage with the groove of the nut (30), with the protrusion housed in the groove. Alternatively, as shown in figure 3, a protrusion (40) may be provided around the inner circumference of the nut (30) and a corresponding groove (41) may be provided on the outer circumference of the sealing gasket (31), such that the groove (41) and protrusion (40) may engage to keep the sealing gasket (31) in place in the nut (30). Alternatively, the nut (30) may be provided with multiple protrusions, each being formed around an inner circumference of the nut (31). In this configuration, the sealing gasket (31) may be provided with multiple protrusions, each being formed arounds an outer circumference of the sealing gasket (31). The protrusions of the nut (30) and the sealing gasket (31) may be offset in an axial direction such that the protrusions are configured to engage with each other to keep the sealing gasket (31) in place in the nut (30) in a similar way as with the protrusion and groove arrangements described above. These configurations allow the sealing gasket (31) to engage with the nut (30) such that the sealing gasket (31) remains in place in the nut (30) even if the nut (30) is removed from the connector end (39). This is achieved by the protrusion(s) or groove(s) of the sealing gasket (31) being positioned between the corresponding sides of the respective groove(s) or protrusion(s) in the nut (30) in an axial direction. Thus, the sealing gasket (31) will remain in the desired position with respect to the nut (30), during installation, in use, or with the nut (30) removed from the connector end (39). With the sealing gasket (31) retained in place in the nut (30) it is easier to attach and remove the valve from its intended position. This is because it is not necessary to hold the sealing gasket in place to stop it from becoming lost or being misaligned when the nut is tightened. This means that there is less danger that the sealing gasket (31) will be misplaced and that a replacement part will have to be purchased, which would increase the cost and time taken to install the valve. Furthermore, this means that the sealing gasket (31) is retained in an optimal position within the nut (30) and is not able to become so misaligned as to compromise the quality of the seal. Thus, this feature helps to provide fast and effective installation of the valve, while also reducing the risk of leaks in the system.

The valve assembly is configured such that, when the nut (10, 30) is tightened over the connector end (19, 39), the sealing gasket (11, 31) is configured to urge the end of the corrugated hose (21) axially towards a lip (15) of the connector end (19, 39). As the end of the corrugated hose (21) is pushed towards the valve, the corrugated hose (21) may contact the lip (15) of the connector end (19, 39). A metal-metal seal may be formed between the corrugated hose (21) and the connector end (19, 39). The metal-metal seal may be formed between the end of the corrugated hose (21) and the lip (15) of the connector end (19, 39). To ensure a good seal, it is preferable that the end of the corrugated hose (21) is in contact with the lip (15) of the connector end (19, 39) when the nut (10, 30) is tightened over the connector end (19, 39). As the corrugated hose (21) is urged axially towards a lip (15) of the connector end (19, 39), the corrugated hose (21) ridges may be compressed.

Optionally, protrusions (16) (which may also be called claws) may be formed on the inside of the sealing gasket (11, 31). The protrusions (16) of the sealing gasket (11, 31) are configured to grasp a ridge of the corrugated hose (21) when the nut (10, 30) is tightened over the connector end (19, 39). There may optionally be two protrusions (16) on the sealing gasket (11, 31). The two protrusions (16) may be configured to grip either side of a ridge of the corrugated hose (21) when the nut (10, 30) is tightened over the connector end (19, 39). There may optionally be more than two protrusions (16) formed on the inside of the sealing gasket (11, 31). This would provide more points of contact with the corrugated hose and thus improve the seal of the connection. There may optionally be only one protrusion formed on the inside of the sealing gasket. With only one protrusion, the sealing gasket can be configured to effectively grip different corrugated hoses having different sizes of ridge. A flat end portion of the sealing gasket (11, 31) may be disposed on the outside of the connector (24) when the nut (10, 30) is tightened over the connector end (19, 39). The flat end portion of the sealing gasket (11, 31) may grip the corrugated hose (21) when the sealing gasket (11, 31) contracts when the nut (10, 30) is tightened over the connector end (19, 39).

The shape of the sealing gasket (11, 31) allows the sealing gasket (11, 31) to radially contract so as to grip the corrugated hose (21) when the nut (10, 30) is tightened over the connector end (19, 39). The sealing gasket (11, 31) may, for example, be a circlip shape. The sealing gasket (11, 31) may therefore by shaped as a ring with a gap in its circumference. Optionally, the sealing gasket (11, 31) may be a complete ring or a broken ring. If the sealing gasket (11, 31) is a circlip or broken ring shape, the sealing gasket (11, 31) may contract into the break in the ring. With this configuration, the sealing gasket (11, 31) may contract enough to grip the corrugated hose (21). Thus, the sealing gasket (11, 31) may optionally grip between the ridges of the corrugated hose (21). The sealing gasket (11, 31) may have slits (22) cut at intervals around the circumference of the ring. The slits (22) may separate different fingers (23) of the sealing gasket (11, 31). When the nut (10, 30) is tightened over the connector end (19, 39), the ends of fingers (23) of the sealing gasket (11, 31) are able to move inwards. The sealing gasket (11, 31) fingers (23) therefore contract into the gaps formed by the slits (22).

The valve assembly comprises a resilient gasket (13, 33) disposed inside the connector end (19, 39). The resilient gasket (13, 33) is configured to be compressed between the corrugated hose (21) and an inner wall of the connector end (19, 39) when the nut (10, 30) is tightened over the connector end (19, 39). The resilient gasket (13, 33) may form a seal between the corrugated hose (21) and the connector end (19, 39). The valve assembly may be configured such that the resilient gasket (13) is axially compressed by the sealing gasket (11) when the nut (10) is tightened over the connector end (19). The resilient gasket (13) may therefore be urged towards the lip (15) of the connector end (19) by the sealing gasket (11) when the nut (10) is tightened over the connector end (19), as illustrated by figures 1 and 2. The resilient gasket (13) may be compressed between the lip (15) of the connector end (19) and the sealing gasket (11) when the nut (10) is tightened over the connector end (19). The resilient gasket (13) may form a seal between the corrugated hose (21) and the connector end (19) and the sealing gasket (11). Optionally, a chamfered surface (26) may be provided on the inside of the connector end to engage with the resilient gasket (13). The chamfered surface (26) may be configured to inhibit the resilient gasket (13) from being urged towards the lip (15) of the connector end (19). The chamfered surface (26) therefore enables the resilient gasket (26) to be disposed in the desired position and to provide a better seal with the sealing gasket (11), the corrugated hose (21) and the connector end (19). Alternatively, a protrusion may be formed on the inside of the connector end (19) to inhibit axial movement of the resilient gasket (13) towards the lip (15) of the connector end (19). Alternatively, the circumference of the inside of the connector end (19) might be smaller near the lip (15) of the connector end than the inner circumference at the terminal end of the connector end (19). Optionally, the inner circumference of the connector end (19) may be tapered. Optionally, there may be a step change in the inner circumference of the connector end (19).

Alternatively, as illustrated by figured 3 and 4, the valve assembly may be configured such that the resilient gasket (33) is not urged axially towards the lip (15) of the connector end (39) by the sealing gasket (33). The valve assembly may therefore be configured such that the resilient gasket (33) is not axially compressed between the lip (15) of the connector end (39) and the sealing gasket (31). Optionally, a protrusion may be formed on the inside of the connector end (39). The protrusion on the inside of the connector end (39) may be configured to prevent the sealing gasket (31) from making contact with the resilient gasket (33) when the nut (30) is tightened over the connector end (39). The protrusion on the inside of the connector end (39) may be configured to hold the resilient gasket (33) in position. The protrusion on the inside of the connector end (39) may therefore decrease the likelihood that the resilient gasket (33) will be misplaced.

The resilient gasket (13, 33) may optionally be formed of silicone.

Optionally, a washer (12) may be disposed between the resilient gasket (13, 33) and the sealing gasket (11, 31). The washer (12) may protect the surfaces of the resilient gasket (13, 33) and the sealing gasket (11, 31). The washer (12) may provide a seal between the connector end (19, 39) and the sealing gasket (11, 31). The washer (12) may also provide a seal between the resilient gasket (13, 33) and the sealing gasket (11, 31). The washer (12) may also provide a seal between the resilient gasket (13, 33) and the nut (10, 30). If there is no washer (12) between the resilient gasket (13, 33) and the sealing gasket (11, 31), these two gaskets may contact each other to form a seal when the nut (10, 30) is tightened.

Optionally, an external thread may be formed on the connector end (19, 39) to engage with the nut (10, 30). Optionally, a removable ring (14) may be disposed on the external thread. The removable ring (14) may be configured to prevent the nut (10, 30) from being tightened over the connector end (19, 39) such that the sealing gasket (11, 31) grips the corrugated hose (21). This means that the valve assembly can be transported and positioned without the possibility that the connection will be engaged accidentally. The removable ring (14) may have a circlip shape. A circlip shaped removable ring (14) with an open section may be clipped or unclipped from its position over the outside of the connector end (19, 39). Alternatively, the removable ring (14) may be a temporary nut or an O-ring. The removable ring (14) is preferably quick and easy to remove when the connection between the hose and the valve assembly is to be engaged.

According to an aspect of the present disclosure, the connector end (19, 39) is integrally formed on the valve main body (20) at one side of the valve to connect the valve main body (20) to a corrugated hose (21) using the connector (24). Optionally, an internal thread connector (4) having an internal thread may be formed on the valve main body (20) on other side of the valve. Alternatively, an external thread connector having an external thread may be formed on the valve main body (20) on other side of the valve. Alternatively, a connector configured to connect to a pipe using a compression fitting may be provided on the valve main body (20) on the other side of the valve. Particularly, the compression fitting may be an olive ring type compression fitting. Alternatively, a connector (24) according to the present invention, may be disposed at one side of the valve to connect the valve main body (20) to a hose, and a different type of connector may be provided at the other side of the valve to connect the valve to a hose or pipe or another fitting.

In another aspect of the present disclosure, a first connector end (19, 39) is integrally formed on the valve main body (20) at one side of the valve to connect the valve main body (20) to a first corrugated hose (21) using a first connector (24), and a second connector end (19, 39) is integrally formed on the valve main body (20) at the other side of the valve to connect the valve main body (20) to a second corrugated hose (21) using a second connector (24). The first and second hose diameters may be the same size or may be different sizes. The size of the connector (24) is configured to correspond to the size of the corresponding hose.

Optionally, the valve assembly may comprise a handle (8) configured to change the valve between an open position and a closed position. The handle (8) may be connected to the valve via a shaft (6). The handle (8) may be attached to the shaft (6) using a handle nut (9). One advantage of this configuration is that there is no need to rotate the valve assembly in order to screw a threaded end to a threaded pipe or connector, which can make it difficult to obtain a well-sealed connection while also having the valve assembly in the desired orientation. Instead, with the configuration disclosed herein, the valve assembly can be placed in the desired orientation, with the corrugated hose (21) end inserted in the connector end (19, 39), and the connection can be made by rotating only the nut (10, 30) to screw it to the connector end (19, 39). Thus, it is easier to connect the valve assembly in the desired location and orientation to ensure that the handle (8) is accessible. If the valve does not comprise a handle (8) for manual operation, it may be fitted with a mechanism for remote operation.

Optionally, the valve assembly may comprise a mounting base (1) formed on the valve main body (20). The mounting base (1) may take the form of a flat surface on one side of the valve. The mounting base (1) may have holes configured to enable the valve assembly to be attached to a mounting location. One advantage of this configuration is that there is no need to rotate the valve assembly in order to screw a threaded end to a threaded pipe or connector, which can make it difficult to obtain a well-sealed connection while also having the valve assembly in the desired orientation. Instead, with the configuration disclosed herein, the valve assembly can be placed in the desired orientation, with the corrugated hose (21) end inserted in the connector end (19, 39), and the connection can be made by rotating only the nut (10, 30) to screw it to the connector end (19, 39). Thus, it is easier to mount the valve assembly in the desired location and orientation. If the valve assembly does not comprise a mounting base (1), it may be held in place by the hose or other fittings connected to the valve assembly.

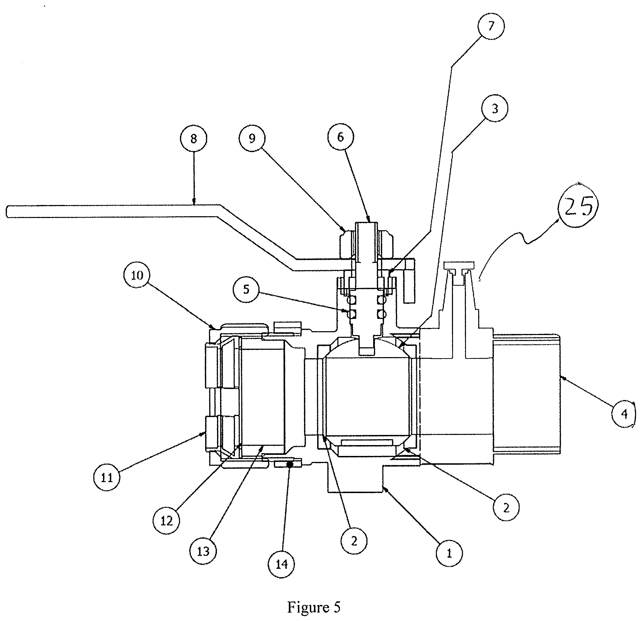

The valve is a ball valve. The lip (15) of the connector end (19, 39) is configured to support a seat ring of the ball valve. The same lip (15) of the connector (24) also prevents the end of the corrugated hose (21) from being inserted or urged too far in to the valve assembly. Therefore, the lip (15) of the connector end (19, 39) is configured to prevent the corrugated hose (21) end from obstructing the valve or otherwise preventing the valve from operating effectively. Although the valve is a ball valve, in an unclaimed example it may be another type of valve, such as a butterfly/disc valve, globe valve or diaphragm valve. The valve assembly may optionally comprise a test point, for example as illustrated in figure 5. The test valve provides a means for checking for leaks.

The valve assembly is connected to the hose by inserting an end of the corrugated hose (21) into the connector end (19, 39) and tightening the nut (10, 30) over the connector end (19, 39). If there is a removable ring (14) on the connector end (19, 39) preventing the nut (10, 30) from being tightened, this must be removed before the nut (10, 30) can be tightened. As the nut (10, 30) is tightened, the sealing gasket (11, 31) radially contracts. As the sealing gasket (11, 31) contracts radially, it makes contact with the corrugated hose (21). Thus, the sealing gasket (11, 31) may grip the corrugated hose (21). The sealing gasket (11, 31) may grip a ridge of the corrugated hose (21). As the nut (10, 30) is tightened more, the corrugated hose (21) may be urged axially towards the valve. As the end of the corrugated hose (21) is urged axially towards the valve, it is prevented from entering the valve by the lip (15) of the connector end (19, 39). As the end of the corrugated hose (21) is urged axially towards the valve and stopped by the lip (15), one or more of the ridges of the corrugated hose (21) may be compressed. In order to tighten the nut (10, 30), it is possible to rotate only the nut (10, 30), keeping the valve assembly and corrugated hose (21) in a constant orientation. Alternatively, it would be possible to keep the nut (10, 30) in a constant orientation and rotate the valve assembly. A further option would be to rotate both the valve assembly and the nut (10, 30).

The corrugated hose (21) may be produced from a stainless steel material. The hose may have a covering surface, for example of PVC. In order to effectively connect the hose to the valve assemble, the covering may be removed from the end of the corrugated hose (21). For example, the covering may be removed from the first 5 to 10 ridges of the end of the hose.

The connector (24), particularly the nut (10, 30), the washer (12) and/or the connector end (19, 39), may optionally be produced from a copper alloy, such as MS58, to provide a long life against rusting and corrosive effects. The connector (24) may optionally be produced from brass. Particularly, the sealing gasket (11, 31) may be formed of brass. The sealing gasket (11, 31) may be configured to contract when the nut is tightened over the connector end (19, 39) and may be configured to expand when the nut (10, 30) is loosened from the connector end (19, 39). The nut (10, 30), the washer (12) and/or the connector end (19, 39) may optionally be formed of brass.

The valve assembly according to the present disclosure may be used in various applications, for example solar energy systems, natural gas systems and water systems.

Aspects of the present disclosure have been described with particular reference to the examples illustrated. While specific examples are shown in the drawings and are herein described in detail, it should be understood, however, that the drawings and detailed description are not intended to limit the invention to the particular form disclosed. It will be appreciated that variations and modifications may be made to the examples described within the scope of the present invention, as defined by the claims.

## Claims

1. A valve assembly comprising:
a valve main body (20);
a valve housed in the valve main body (20); and
a connector (24) comprising a nut (10, 30), a sealing gasket (11, 31), and a connector end (19, 39);
wherein the connector end (19, 39) is integrally formed as part of the valve main body (20),
wherein the connector (24) is configured to connect the valve main body (20) to a corrugated hose (21) that has an end disposed within the connector end (19, 39), and
wherein the connector (24) is configured such that the sealing gasket (11, 31) radially contracts so as to grip the corrugated hose (21) when the nut (10, 30) is tightened over the connector end (19, 39);
wherein the valve assembly further comprises a resilient gasket (13, 33) disposed inside the connector end (19, 39), wherein the resilient gasket (13, 33) is compressed between the corrugated hose (21) and an inner wall of the connector end (19, 39) when the nut (10, 30) is tightened over the connector end (19, 39);
**characterised in that**
the valve is a ball valve;
the connector end (19, 39) comprises a lip (15) configured to support a seat ring of the ball valve, and
wherein, when the nut (10, 30) is tightened over the connector end (19, 39), the sealing gasket (11, 31) is configured to urge the end of the corrugated hose (21) axially towards the lip (15) of the connector end (19, 39), wherein the lip (15) is configured to prevent the end of the corrugated hose (21) from being inserted or urged too far in to the valve assembly.

2. The valve assembly according to claim 1, wherein a protrusion is formed on the inside of the sealing gasket (11), and wherein the protrusion of the sealing gasket (11) is configured to engage with a ridge of the corrugated hose (21) when the nut (10) is tightened over the connector end (19).

3. A valve assembly according to any of the preceding claims, wherein two protrusions (16) are formed on the inside of the sealing gasket (11), and wherein the protrusions (16) of the sealing gasket (11) are configured to grasp a ridge of the corrugated hose (21) when the nut (10) is tightened over the connector end (19).

4. A valve assembly according to any of the preceding claims, wherein the sealing gasket (11, 31) is a circlip shape, such that the sealing gasket (11, 31) radially contracts so as to grip the corrugated hose (21) when the nut (10, 30) is tightened over the connector end (19, 39).

5. A valve assembly according to any of the preceding claims, wherein the sealing gasket (31) is a ring with slits (22) forming gaps at intervals around the circumference of the sealing gasket (31), such that the sealing gasket (31) radially contracts so as to grip the corrugated hose (21) when the nut (30) is tightened over the connector end (39).

6. A valve assembly according to claim 5, wherein the sealing gasket (31) is configured to engage with the nut such that the sealing gasket (31) will remain in place in the nut (30) if the nut (30) is removed from the connector end (39).

7. A valve assembly according to any of the preceding claims, wherein the sealing gasket (11, 31) is formed of brass.

8. A valve assembly according to any of the preceding claims, wherein the resilient gasket (13, 33) is axially compressed by the sealing gasket (11) when the nut (10) is tightened over the connector end (19).

9. A valve assembly according to any of the preceding claims, wherein the sealing gasket (11, 31) has a sloped outer surface (17, 37), and wherein the connector (24) is configured such that the sloped outer surface (17, 37) of the sealing gasket (11, 31) engages with another sloped surface (18, 38) of the connector (24) such that the sealing gasket (11, 31) radially contracts when the nut (10, 30) is tightened over the connector end (19, 39).

10. A valve assembly according to claim 9, wherein the other sloped surface of the connector (24) is an inside surface (18) of the nut (10).

11. A valve assembly according to claim 9, wherein the other sloped surface of the connector (24) is an inside surface (38) of the connector end (39).

12. A valve assembly according to any of the preceding claims, wherein an external thread is formed on the connector end (19, 39) to engage with the nut (10, 30), and wherein a removable ring (14) is disposed over the external thread, whereby the removable ring (14) prevents the nut (10, 30) from being tightened over the connector end (19, 39) such that the sealing gasket (11, 31) grips the corrugated hose (21).

13. A valve assembly according to any of the preceding claims, comprising two connectors, wherein a first connector end (19, 39) is integrally formed on the valve main body (20) at one side of the valve to connect the valve main body (20) to a first corrugated hose (21) using a first connector (24), and wherein at the other side of the valve
a second connector end (19, 39) is integrally formed on the valve main body (20) to connect the valve main body (20) to a second corrugated hose (21) using a second connector (24); or
an external thread connector having an external thread is formed on the valve main body (20); or
an internal thread connector having an internal thread is formed on the valve main body (20); or
a connector configured to connect the valve assembly to a pipe using an olive compression fitting is provided.

14. A method of connecting the valve assembly of any of the preceding claims to a corrugated hose (21), comprising the following steps:
inserting an end of the corrugated hose (21) into the connector end (19, 39); and
tightening the nut (10, 30) over the connector end (19, 39) such that the sealing gasket (11, 31) radially contracts so as to grip the corrugated hose (21).

## Patentansprüche

1. Ventileinheit, die Folgendes umfasst:
einen Ventilhauptkörper (20);
ein in dem Ventilhauptkörper (20) untergebrachtes Ventil; und
einen Verbinder (24), der eine Mutter (10, 30), eine Flanschdichtung (11, 31) und ein Verbinderende (19, 39) umfasst;
wobei das Verbinderende (19, 39) integral als Teil des Ventilhauptkörpers (20) gebildet ist,
wobei der Verbinder (24) dafür konfiguriert ist, den Ventilhauptkörper (20) mit einem gewellten Schlauch (21) zu verbinden, der ein Ende aufweist, das innerhalb des Verbinderendes (19, 39) angeordnet ist, und
wobei der Verbinder (24) so konfiguriert ist, dass sich die Flanschdichtung (11, 31) radial zusammenzieht, um den gewellten Schlauch (21) zu greifen, wenn die Mutter (10, 30) über dem Verbinderende (19, 39) festgezogen wird;
wobei die Ventilanordnung ferner eine elastische Flanschdichtung (13, 33) umfasst, die innerhalb des Verbinderendes (19, 39) angeordnet ist, wobei die elastische Flanschdichtung (13, 33) zwischen dem gewellten Schlauch (21) und einer Innenwand des Verbinderendes (19, 39) zusammengedrückt wird, wenn die Mutter (10, 30) über dem Verbinderende (19, 39) angezogen wird;
**dadurch gekennzeichnet, dass**
das Ventil ein Kugelventil ist;
das Verbinderende (19, 39) eine Lippe (15) umfasst, die dafür konfiguriert ist, einen Sitzring des Kugelventils zu stützen, und
wobei, wenn die Mutter (10, 30) über dem Verbinderende (19, 39) festgezogen wird, die Flanschdichtung (11, 31) dafür konfiguriert ist, das Ende des gewellten Schlauchs (21) axial in Richtung der Lippe (15) des Verbinderendes (19, 39) zu drücken, wobei die Lippe (15) dafür konfiguriert ist, zu verhindern, dass das Ende des gewellten Schlauchs (21) zu weit in die Ventilanordnung eingeführt oder hineingedrückt wird.

2. Ventilanordnung nach Anspruch 1, wobei ein Vorsprung auf der Innenseite der Flanschdichtung (11) gebildet ist, und wobei der Vorsprung der Flanschdichtung (11) dafür konfiguriert ist, mit einer Rippe des gewellten Schlauchs (21) in Eingriff zu kommen, wenn die Mutter (10) über dem Verbinderende (19) festgezogen wird.

3. Ventilanordnung nach einem der vorhergehenden Ansprüche, wobei zwei Vorsprünge (16) auf der Innenseite der Flanschdichtung (11) gebildet sind und wobei die Vorsprünge (16) der Flanschdichtung (11) dafür konfiguriert sind, einen Steg des gewellten Schlauchs (21) zu greifen, wenn die Mutter (10) über dem Verbinderende (19) festgezogen wird.

4. Ventilanordnung nach einem der vorhergehenden Ansprüche, wobei die Flanschdichtung (11, 31) die Form eines Sicherungsrings hat, so dass sich die Flanschdichtung (11, 31) radial zusammenzieht, um den gewellten Schlauch (21) zu greifen, wenn die Mutter (10, 30) über dem Verbinderende (19, 39) festgezogen wird.

5. Ventilanordnung nach einem der vorhergehenden Ansprüche, wobei die Flanschdichtung (31) ein Ring mit Schlitzen (22) ist, die in Abständen um den Umfang der Flanschdichtung (31) herum Lücken bilden, so dass sich die Flanschdichtung (31) radial zusammenzieht, um den gewellten Schlauch (21) zu greifen, wenn die Mutter (30) über dem Verbinderende (39) festgezogen wird.

6. Ventilanordnung nach Anspruch 5, wobei die Flanschdichtung (31) dafür konfiguriert ist, mit der Mutter in Eingriff zu kommen, sodass die Flanschdichtung (31) in der Mutter (30) an ihrem Platz bleibt, wenn die Mutter (30) vom Verbinderende (39) entfernt wird.

7. Ventilanordnung nach einem der vorhergehenden Ansprüche, wobei die Flanschdichtung (11, 31) aus Messing besteht.

8. Ventilanordnung nach einem der vorhergehenden Ansprüche, wobei die elastische Flanschdichtung (13, 33) durch die Flanschdichtung (11) axial zusammengedrückt wird, wenn die Mutter (10) über dem Verbinderende (19) festgezogen wird.

9. Ventilanordnung nach einem der vorhergehenden Ansprüche, wobei die Flanschdichtung (11, 31) eine geneigte Außenfläche (17, 37) aufweist, und wobei der Verbinder (24) so konfiguriert ist, dass die geneigte Außenfläche (17, 37) der Flanschdichtung (11, 31) mit einer anderen geneigten Fläche (18, 38) des Verbinders (24) in Eingriff kommt, so dass sich die Flanschdichtung (11, 31) radial zusammenzieht, wenn die Mutter (10, 30) über dem Verbinderende (19, 39) angezogen wird.

10. Ventilanordnung nach Anspruch 9, wobei die andere geneigte Fläche des Verbinders (24) eine Innenfläche (18) der Mutter (10) ist.

11. Ventilanordnung nach Anspruch 9, wobei die andere geneigte Fläche des Verbinders (24) eine Innenfläche (38) des Verbinderendes (39) ist.

12. Ventilanordnung nach einem der vorhergehenden Ansprüche, wobei ein Außengewinde am Verbinderende (19, 39) gebildet ist, um mit der Mutter (10, 30) in Eingriff zu kommen, und wobei ein abnehmbarer Ring (14) über dem Außengewinde angeordnet ist, wobei der abnehmbare Ring (14) verhindert, dass die Mutter (10, 30) über dem Verbinderende (19, 39) festgezogen wird, so dass die Flanschdichtung (11, 31) den gewellten Schlauch (21) greift.

13. Ventilanordnung nach einem der vorhergehenden Ansprüche, die zwei Verbinder umfasst, wobei ein erstes Verbinderende (19, 39) an einer Seite des Ventilhauptkörpers (20) integral an dem Ventilhauptkörper gebildet ist, um den Ventilhauptkörper (20) unter Verwendung eines ersten Verbinders (24) mit einem ersten gewellten Schlauch (21) zu verbinden, und wobei an der anderen Seite des Ventils
ein zweites Verbinderende (19, 39) integral an dem Ventilhauptkörper (20) gebildet ist, um den Ventilhauptkörper (20) unter Verwendung eines zweiten Verbinders (24) mit einem zweiten gewellten Schlauch (21) zu verbinden; oder
ein Außengewindeverbinder mit einem Außengewinde an dem Ventilhauptkörper (20) gebildet ist; oder
ein Innengewindeverbinder mit einem Innengewinde an dem Ventilhauptkörper (20) gebildet ist; oder
ein Verbinderstück bereitgestellt wird, das dafür konfiguriert ist, die Ventilanordnung unter Verwendung einer Schneidringverschraubung mit einem Rohr zu verbinden.

14. Verfahren zum Verbinden der Ventilanordnung nach einem der vorhergehenden Ansprüche mit einem gewellten Schlauch (21), das folgende Schritte umfasst:
Einführen eines Endes des gewellten Schlauchs (21) in das Verbinderende (19, 39); und
Festziehen der Mutter (10, 30) über dem Verbinderende (19, 39), so dass sich die Flanschdichtung (11, 31) radial zusammenzieht, um den gewellten Schlauch (21) zu greifen.

## Revendications

1. Ensemble de vanne comprenant :
un corps principal de vanne (20) ;
une vanne logée dans le corps principal de vanne (20) ; et
un connecteur (24) comprenant un écrou (10, 30), un joint d'étanchéité (11, 31) et une extrémité de connecteur (19, 39) ;
dans lequel l'extrémité du connecteur (19, 39) est formée d'un seul tenant en tant que partie du corps principal de vanne (20),
dans lequel le connecteur (24) est configuré pour connecter le corps principal de vanne (20) à un tuyau ondulé (21) qui a une extrémité disposée à l'intérieur de l'extrémité du connecteur (19, 39), et
dans lequel le connecteur (24) est configuré de telle sorte que le joint d'étanchéité (11, 31) se contracte radialement de manière à saisir le tuyau ondulé (21) lorsque l'écrou (10, 30) est serré sur l'extrémité du connecteur (19, 39) ;
dans lequel l'ensemble de vanne comprend en outre un joint élastique (13, 33) disposé à l'intérieur de l'extrémité de connecteur (19, 39), dans lequel le joint élastique (13, 33) est comprimé entre le tuyau ondulé (21) et une paroi intérieure de l'extrémité de connecteur (19, 39) lorsque l'écrou (10, 30) est serré sur l'extrémité de connecteur (19, 39) ;
**caractérisé en ce que**
la vanne est une vanne à boisseau sphérique ;
l'extrémité du connecteur (19, 39) comprend une lèvre (15) configurée pour supporter une bague de siège de la vanne à boisseau sphérique, et
dans lequel, lorsque l'écrou (10, 30) est serré sur l'extrémité du connecteur (19, 39), le joint d'étanchéité (11, 31) est configuré pour pousser l'extrémité du tuyau ondulé (21) axialement vers la lèvre (15) de l'extrémité du connecteur (19, 39), dans lequel la lèvre (15) est configurée pour empêcher l'extrémité du tuyau ondulé (21) d'être insérée ou poussée trop loin dans l'ensemble de vanne.

2. Ensemble de vanne selon la revendication 1, dans lequel une saillie est formée à l'intérieur du joint d'étanchéité (11), et dans lequel la saillie du joint d'étanchéité (11) est configurée pour s'engager avec une crête du tuyau ondulé (21) lorsque l'écrou (10) est serré sur l'extrémité du connecteur (19).

3. Ensemble de vanne selon l'une quelconque des revendications précédentes, dans lequel deux saillies (16) sont formées à l'intérieur du joint d'étanchéité (11), et dans lequel les saillies (16) du joint d'étanchéité (11) sont configurées pour saisir une crête du tuyau ondulé (21) lorsque l'écrou (10) est serré sur l'extrémité du connecteur (19).

4. Ensemble de vanne selon l'une quelconque des revendications précédentes, dans lequel le joint d'étanchéité (11, 31) a la forme d'un circlip, de telle sorte que le joint d'étanchéité (11, 31) se contracte radialement de manière à saisir le tuyau ondulé (21) lorsque l'écrou (10, 30) est serré sur l'extrémité du connecteur (19, 39).

5. Ensemble de vanne selon l'une quelconque des revendications précédentes, dans lequel le joint d'étanchéité (31) est un anneau avec des fentes (22) formant des espaces à intervalles réguliers autour de la circonférence du joint d'étanchéité (31), de telle sorte que le joint d'étanchéité (31) se contracte radialement de manière à saisir le tuyau ondulé (21) lorsque l'écrou (30) est serré sur l'extrémité du connecteur (39).

6. Ensemble de vanne selon la revendication 5, dans lequel le joint d'étanchéité (31) est configuré pour s'engager avec l'écrou de telle sorte que le joint d'étanchéité (31) reste en place dans l'écrou (30) si l'écrou (30) est retiré de l'extrémité du connecteur (39).

7. Ensemble de vanne selon l'une quelconque des revendications précédentes, dans lequel le joint d'étanchéité (11, 31) est formé de laiton.

8. Ensemble de vanne selon l'une quelconque des revendications précédentes, dans lequel le joint élastique (13, 33) est comprimé axialement par le joint d'étanchéité (11) lorsque l'écrou (10) est serré sur l'extrémité du connecteur (19).

9. Ensemble de vanne selon l'une quelconque des revendications précédentes, dans lequel le joint d'étanchéité (11, 31) présente une surface extérieure inclinée (17, 37), et dans lequel le connecteur (24) est configuré de telle sorte que la surface extérieure inclinée (17, 37) du joint d'étanchéité (11, 31) s'engage avec une autre surface inclinée (18, 38) du connecteur (24) de telle sorte que le joint d'étanchéité (11, 31) se contracte radialement lorsque l'écrou (10, 30) est serré sur l'extrémité du connecteur (19, 39).

10. Ensemble de vanne selon la revendication 9, dans lequel l'autre surface inclinée du connecteur (24) est une surface intérieure (18) de l'écrou (10).

11. Ensemble de vanne selon la revendication 9, dans lequel l'autre surface inclinée du connecteur (24) est une surface intérieure (38) de l'extrémité du connecteur (39).

12. Ensemble de vanne selon l'une quelconque des revendications précédentes, dans lequel un filetage externe est formé sur l'extrémité du connecteur (19, 39) pour s'engager avec l'écrou (10, 30), et dans lequel une bague amovible (14) est disposée sur le filetage externe, de sorte que la bague amovible (14) empêche l'écrou (10, 30) d'être serré sur l'extrémité du connecteur (19, 39) de telle sorte que le joint d'étanchéité (11, 31) saisit le tuyau ondulé (21).

13. Ensemble de vanne selon l'une quelconque des revendications précédentes, comprenant deux connecteurs, dans lequel une première extrémité de connecteur (19, 39) est formée d'un seul tenant sur le corps principal de vanne (20) d'un côté de la vanne pour connecter le corps principal de vanne (20) à un premier tuyau ondulé (21) à l'aide d'un premier connecteur (24), et dans lequel de l'autre côté de la vanne
une seconde extrémité de connecteur (19, 39) est formée d'un seul tenant sur le corps principal de vanne (20) pour connecter le corps principal de vanne (20) à un second tuyau ondulé (21) à l'aide d'un second connecteur (24) ; ou
un connecteur à filetage externe ayant un filetage externe est formé sur le corps principal de la vanne (20) ; ou
un connecteur à filetage interne ayant un filetage interne est formé sur le corps principal de la vanne (20) ; ou
un connecteur configuré pour connecter l'ensemble de vanne à un tuyau à l'aide d'un raccord à compression à olive est fourni.

14. Procédé de raccordement de l'ensemble de vanne selon l'une quelconque des revendications précédentes à un tuyau ondulé (21), comprenant les étapes suivantes :
l'insertion d'une extrémité du tuyau ondulé (21) dans l'extrémité du connecteur (19, 39) ; et
le serrage de l'écrou (10, 30) sur l'extrémité du connecteur (19, 39) de telle sorte que le joint d'étanchéité (11, 31) se contracte radialement de manière à saisir le tuyau ondulé (21).
